# EUROPEAN PATENT SPECIFICATION

(11) **EP 2 559 866 B1**
(45) Date of publication and mention of the grant of the patent: **01.01.2014**
(21) Application number: 11177974.0
(22) Date of filing: 18.08.2011
(51) Int. Cl.: F01K 7/34, F23J 15/06, F23J 15/08

(54) **Power plant heat integration**
Kraftwerkswärmeintegrierung
Intégration de la chaleur d'une centrale électrique

(43) Date of publication of application: 20.02.2013
(73) Proprietor: Alstom Technology Ltd, 5400 Baden (CH)
(72) Inventor: Stallmann, Olaf, 55270 Essenheim (DE)

(56) References cited:
- WO-A2-2005/045316
- WO-A2-2011/006882
- DE-A1-102009 032 537

## Description

### Technical field

The present invention relates to systems and methods for transferring heat from a carbon dioxide rich flue gas generated in a boiler combusting fuel in the presence of an oxygen-containing gas and generating steam driving a steam turbine to a steam turbine condensate generated in the steam turbine.

### Background

In recent years it has become obvious that the generation of greenhouse gases leads to global warming and that further increase in greenhouse gas production will accelerate global warming. Since carbon dioxide (CO₂) is identified as a main greenhouse gas, carbon capture and storage (CCS) is considered as one of the potential major means to reduce release of greenhouse gases into the atmosphere and to control global warming. In this context CCS is defined as the process of CO₂ capture, compression, transport and storage. Capture is defined as a process in which CO₂ is removed either from the flue gases after combustion of a carbon based fuel or the removal of and processing of carbon before combustion. However, CCS, and in particular the compression of carbon-dioxide containing flue gases is a procedure which consumes a considerable amount of power, which in turn reduces the energy efficiency of a power plant. Suggestions have therefore been presented wherein heat generated in compression of flue gases is used in other parts of the power plant.

WO 2011/006862 discloses a power plant wherein heat resulting from cooling compressed flue gases is recovered. The discharge of a low-pressure flue gas compressor is lead to a heat exchanger connected to a heat recovery system. This system is connected to a feedwater preheater or to a condensate extraction pump meaning that part of the condensates can be heated directly by the flue gas and bypass the low pressure heaters, thus reducing the steam consumption of these heaters and enabling the plant to produce more power

WO 2011/006882 discloses a power plant wherein the water condensate from the CO₂ capture system are mixed with the steam turbine condensate.

Even though these systems present an improvement of the energy efficiency of a power plant provided with CO2 capture, there is still a need for further solutions for recovering heat in a power plant.

### Summary

According to one aspect illustrated herein, there is provided a heat recovery system being operative for transferring heat from a carbon dioxide rich flue gas generated in a boiler combusting fuel in the presence of an oxygen-containing gas and generating steam driving a steam turbine to a steam turbine condensate generated in the steam turbine, the heat recovery system comprising
a flue gas condenser arranged to cool the carbon dioxide rich flue gas such that vapor is condensed from the flue gas,
at least one compression stage arranged to compress the carbon dioxide rich flue gas downstream of the flue gas condenser to form a stream of compressed and heated carbon dioxide rich flue gas,
a first pipe for forwarding at least a portion of the steam turbine condensate from the steam turbine to a first condensate reheater,
the first condensate reheater arranged to transfer heat from the flue gas condenser to the steam turbine condensate to form a heated stream of steam turbine condensate at a first temperature,
a second pipe for forwarding at least a first portion of the heated stream of steam turbine condensate at the first temperature to a second condensate reheater,
the second condensate reheater arranged to transfer heat to the heated stream of steam turbine condensate at the first temperature from the stream of compressed and heated carbon dioxide rich flue gas to form a heated stream of steam turbine condensate at a second temperature, the second temperature being higher than the first temperature, and
a return pipe for forwarding at least a portion of the heated stream of steam turbine condensate at the second temperature to the boiler.

According to other aspects illustrated herein, a method of transferring heat from a carbon dioxide rich flue gas generated in a boiler combusting fuel in the presence of an oxygen-containing gas and generating steam driving a steam turbine to a steam turbine condensate generated in the steam turbine is provided, the method comprising the steps of
cooling the carbon dioxide rich flue gas in a flue gas condenser such that vapor is condensed from the flue gas,
compressing the flue gas downstream of the flue gas condenser to form a stream of compressed and heated flue gas,
forwarding at least a portion of the steam turbine condensate from the steam turbine to a first condensate reheater,
transferring heat from the flue gas condenser to the steam turbine condensate in the first condensate reheater to form a heated stream of steam turbine condensate at a first temperature,
forwarding at least a first portion of the heated stream of steam turbine condensate at the first temperature to a second condensate reheater,
transferring heat to the heated stream of steam turbine condensate at the first temperature from the stream of compressed and heated carbon dioxide rich flue gas in the second condensate reheater to form a heated stream of steam turbine condensate at a second temperature, the second temperature being higher than the first temperature, and
forwarding at least a portion of the heated stream of steam turbine condensate at the second temperature to the boiler.

The above described and other features are exemplified by the following figures and detailed description.

### Brief description of the drawings

Referring now to the figures, which are exemplary embodiments, and wherein the like elements are numbered alike:

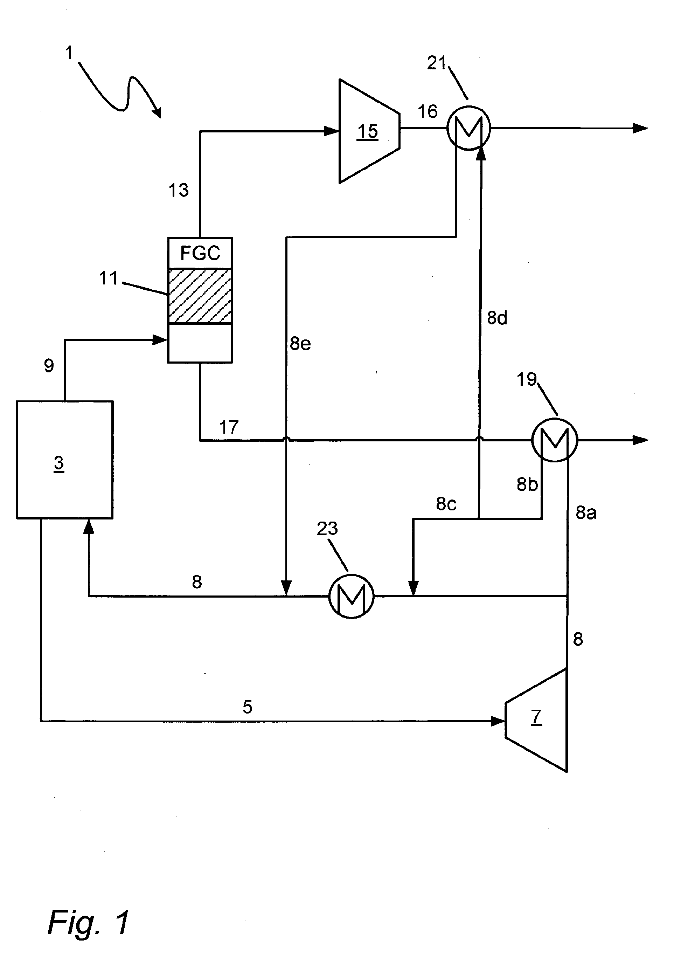

Fig 1 schematically illustrates a heat recovery system.

### Detailed description of preferred embodiments

In a boiler system 1 as shown in Fig 1 a boiler 3 for burning a fuel, such as coal or oil, supplies steam via a duct 5 to a condensating steam turbine 7. The condensate from the steam turbine 7 leaves the steam turbine 7 via a pipe 8. Carbon dioxide rich flue gas produced in the boiler 3 is fed via a duct 9 to a flue gas condenser 11 for purifying and cooling the carbon dioxide rich flue gas prior to compression and forwarding to a CCS system.

By "carbon dioxide rich flue gas" is meant that the flue gas leaving the boiler 3 via the duct 9 will contain at least 40 % by volume of carbon dioxide, CO₂. Often more than 50% by volume of the flue gas leaving the boiler 3 will be carbon dioxide. The balance of the "carbon dioxide rich flue gas" will be about 20-50% by volume of water vapour (H₂O), 2-7 % by volume of oxygen (O₂), since a slight oxygen excess is often preferred in the boiler 3, and totally about 0-10 % by volume of other gases, including mainly nitrogen (N₂) and argon (Ar), since some leakage of air can seldom be completely avoided.

In the flue gas condenser 11 the carbon dioxide rich flue gas is brought into direct or indirect contact with a cooling liquid, e.g. water. The carbon dioxide rich flue gas may be supplied at the bottom of the flue gas condenser 11 and move vertically upwards while being brought into contact, in a countercurrent flow manner, with cooling liquid flowing down, thus condensing water vapor from the carbon dioxide rich flue gas and lowering its temperature. The cooled and purified carbon dioxide rich flue gas then leaves the condenser 11 via the duct 13 and is forwarded to a compression stage 15 where the carbon dioxide rich flue gas is compressed and in that process experiences a rise in temperature. The compressed and heated carbon dioxide rich flue gas leaves the compression stage 15 via duct 16.

The vapor condensed from the carbon dioxide rich flue gas, the flue gas condensate, leaves the flue gas condenser 11 via a pipe 17, together with the cooling liquid. The cooling liquid and the condensed water vapors may as an alternative leave the flue gas condenser 11 in two separate pipes, which is normally the case when the cooling liquid and the carbon dioxide rich flue gas are brought into indirect contact only in the flue gas condenser 11. The cooling liquid may, after cooling, be returned to the flue gas condenser 11 for reuse via a not shown pipe.

Two heat exchangers or condensate reheaters 19 and 21 are arranged for transferring heat to the condensate leaving the steam turbine 7, before the steam turbine condensate is fed back to the boiler 3 as boiler feedwater. The first condensate reheater 19 is arranged in the pipe 17 and thus transfers heat from the flue gas condenser 11 to the steam turbine condensate.

A portion of the steam turbine condensate is fed via a pipe 8a to the first condensate reheater 19 and is heated to a first temperature of e.g. 50-90 °C. It may be noted that even though the first condensate reheater 19 for clarity reasons is shown as a separate device in Fig 1, it may also be integrated in the flue gas condenser 11. There are a number of different possibilities for transferring heat from the flue gas condenser 11 to the steam turbine condensate. One option is to pass the cooling liquid heated by the carbon dioxide rich flue gas in the flue gas condenser 11 through the condensate reheater 19. The cooling liquid may or may not be mixed with the condensed vapors from the flue gas, depending on whether the cooling liquid was brought into direct or indirect contact with the flue gas. Another option is to let the steam turbine condensate function as the cooling liquid, thus allowing the flue gas condenser 11 in itself to serve as the first condensate reheater 19 by bringing the carbon dioxide rich flue gas into indirect contact with the steam turbine condensate in the flue gas condenser 11.

A first portion of the heated steam turbine condensate in the pipe 8b is then diverted via a pipe 8d to the second condensate reheater 21 where the flue gas compressed in the compression stage 15 transfers heat to this portion of the steam turbine condensate, thus heating it to a second temperature of 100-260 °C.

The compression stage 15 may comprise an adiabatic or essentially adiabatic compressor implying that as much heat as possible is available for transfer in the second condensate reheater 21, in turn reducing the energy losses for the system. An adiabatic compressor provides a temperature raise in the flue gas to 170°C - 280°C after compression of the carbon dioxide rich flue gas, which in turn gives an efficient transfer of heat to the steam turbine condensate in the second condensate preheater 21. Downstream the second condensate reheater 21 the temperature of the carbone dioxide flue gas may be lowered to 53°C after the transfer of heat to the steam turbine condensate.

The compression stage 15 may comprise an axial compressor, which may or may not be adiabatic. This enables a more efficient energy recovery, as the temperature increase of the flue gas is higher and the compression power requirements are lower than when using other alternatives such as an intergrally geared design with a centrifugal compressor.

A second portion of the heated condensate at the first temperature in the pipe 8b is returned to the pipe 8 upstream of a steam condensate preheater 23 via a pipe 8c, bypassing the second preheater 21. In the steam condensate preheater 23, or a series of steam condensate preheaters as may be the case, the condensate is heated further to a temperature of e.g. 100-180°C. The condensate preheater 23 heats steam turbine condensate by using extraction steam from the steam turbine 7. For sake of simplicity pipes for transferring steam from the steam turbine 7 to the steam condensate preheater 23 are not shown in Fig 1.

At least a portion of the steam condensate heated to the second temperature returns to the pipe 8 via a pipe 8e, downstream the condensate preheater 23 and is fed back to the boiler 3. That a portion of the steam turbine condensate has been reheated in the first and second reheater 19 and 21 means that less heating capacity (fewer or smaller preheaters) is required by the condensate preheater 23.

The heated condensate is finally returned via the pipe 8 to the boiler 3 as boiler feedwater. The heated condensate could potentially be used in another boiler instead, but the principles of the heat recovery system would still be the same.

The two condensate reheaters 19 and 21 enables an efficient heat recovery to the boiler feedwater, by using both heat from the flue gas when it passes the flue gas condenser 11 and from the flue gas when it is compressed in the compression stage 15. The compressed and heated carbon dioxide rich flue gas leaving the compression stage 15 must be cooled to be able to be further compressed and processed in a number of stages (not shown) in preparation for capturing the carbon dioxide in a CCS system, and by using the second condensate reheater 21 for this cooling less energy is lost.

The flue gas condenser or the cooling liquid in the flue gas condenser 11 also need cooling for the flue gas condenser to be able to condense vapors from the flue gas. By using the first condensate reheater 19 this cooling is achieved by transferring heat from the flue gas condenser to the steam turbine condensate. This makes use of the heat dissipated from the flue gas as it is cooled and purified in preparation for compression, and in turn creates further energy savings.

In other words, in a system and a method for recovering heat in a power plant, heat from the flue gas condenser 11 is used in the first condensate reheater 19 for heating the condensate from the steam turbine 7. Heat from the compressed and heated stream of carbon dioxide rich flue gas is transferred in the second condensate reheater 21 to the steam turbine condensate for further heating portions thereof.

While the invention has been described with reference to a number of preferred embodiments, it will be understood by those skilled in the art that various changes may be made and equivalents may be substituted for elements thereof without departing from the scope of the present invention. In addition, many modifications may be made to adapt a particular situation or material to the teachings of the invention without departing from the essential scope thereof. Therefore, it is intended that the invention not be limited to the particular embodiments disclosed as the best mode contemplated for carrying out this invention, but that the invention will include all embodiments falling within the scope of the appended claims. Moreover, the use of the terms first, second, etc. do not denote any order or importance, but rather the terms first, second, etc. are used to distinguish one element from another.

## Claims

1. A heat recovery system being operative for transferring heat
from a carbon dioxide rich flue gas generated in a boiler (3) combusting fuel in the presence of an oxygen-containing gas and generating steam driving a steam turbine (7)
to a steam turbine condensate generated in the steam turbine (7),
the heat recovery system comprising
a flue gas condenser (11) arranged to cool the carbon dioxide rich flue gas such that vapor is condensed from the flue gas,
at least one compression stage (15) arranged to compress the carbon dioxide rich flue gas downstream of the flue gas condenser (11) to form a stream of compressed and heated carbon dioxide rich flue gas, and **characterized by**
a first pipe (8, 8a) for forwarding at least a portion of the steam turbine condensate from the steam turbine (7) to a first condensate reheater (19),
the first condensate reheater (19) arranged to transfer heat from the flue gas condenser (11) to the steam turbine condensate to form a heated stream of steam turbine condensate at a first temperature,
a second pipe (8b, 8d) for forwarding at least a first portion of the heated stream of steam turbine condensate at the first temperature to a second condensate reheater (21),
the second condensate reheater (21) arranged to transfer heat to the heated stream of steam turbine condensate at the first temperature from the stream of compressed and heated carbon dioxide rich flue gas to form a heated stream of steam turbine condensate at a second temperature, the second temperature being higher than the first temperature, and
a return pipe (8) for forwarding at least a portion of the heated stream of steam turbine condensate at the second temperature to the boiler.

2. The heat recovery system of claim 1, further comprising a third pipe (8b, 8c, 8) for forwarding a second portion of the heated stream of steam turbine condensate at the first temperature from the first condensate reheater (19) to a condensate preheater (23) for preheating steam turbine condensate using steam from the steam turbine (7), such second portion by-passing the second condensate reheater (21).

3. The heat recovery system of any one of the preceding claims, further comprising a fourth pipe (8e, 8) for forwarding the first portion of the heated stream of condensate at the second temperature from the second condensate reheater (21) to the boiler (3), the first portion by-passing a preheater (23) preheating steam turbine condensate using steam from the steam turbine (7).

4. The heat recovery system of any of the preceding claims, wherein the flue gas condenser (11) is arranged to cool the flue gas by bringing the flue gas into direct or indirect contact with a cooling liquid such that a heated stream of cooling liquid is formed, and wherein the first condensate reheater (19) is arranged to transfer heat to the steam turbine condensate from the heated stream of cooling liquid.

5. The heat recovery system of any of claims 1-3, wherein the flue gas condenser (11) is arranged to cool the carbon dioxide rich flue gas by bringing the carbon dioxide rich flue gas into indirect contact with the steam turbine condensate such that the flue gas condenser (11) functions as the first condensate reheater.

6. The heat recovery system of any of the previous claims, wherein the at least one compression stage (15) comprises an adiabatic compressor.

7. The heat recovery system of any of the previous claims, wherein the at least one compression stage (15) comprises an axial compressor.

8. A method of transferring heat from a carbon dioxide rich flue gas generated in a boiler (3) combusting fuel in the presence of an oxygen-containing gas and generating steam driving a steam turbine (7) to a steam turbine condensate generated in the steam turbine (7), comprising the steps of
cooling the carbon dioxide rich flue gas in a flue gas condenser (11) such that vapor is condensed from the flue gas,
compressing the flue gas downstream of the flue gas condenser (11) to form a stream of compressed and heated flue gas, and **characterized by**
forwarding at least a portion of the steam turbine condensate from the steam turbine (7) to a first condensate reheater (19),
transferring heat from the flue gas condenser (11) to the steam turbine (7) condensate in the first condensate reheater (19) to form a heated stream of steam turbine condensate at a first temperature,
forwarding at least a first portion of the heated stream of steam turbine condensate at the first temperature to a second condensate reheater (21),
transferring heat to the heated stream of steam turbine condensate at the first temperature from the stream of compressed and heated carbon dioxide rich flue gas in the second condensate reheater (21) to form a heated stream of steam turbine condensate at a second temperature, the second temperature being higher than the first temperature, and
forwarding at least a portion of the heated stream of steam turbine condensate at the second temperature to the boiler (3).

9. The method of claim 8, further comprising the step of
forwarding a second portion of the heated stream of condensate at the first temperature from the first condensate reheater (19) to a condensate preheater (23) for preheating steam turbine condensate using steam from the steam turbine (7), such second portion by-passing the second condensate reheater (21).

10. The method of any one of claims 8-9, further comprising the step of
forwarding the first portion of the heated stream of steam turbine condensate at the second temperature from the second condensate reheater (21) to the boiler (3), the first portion by-passing a preheater (23) preheating steam turbine condensate using steam from the steam turbine (7).

11. The method of any of claims 8-10, wherein the step of cooling the flue gas in the flue gas condenser (11) comprises bringing the flue gas into direct or indirect contact with a cooling liquid such that a heated stream of cooling liquid is formed, and wherein the step of transferring heat to the condensate in the first condensate reheater (19) comprises transferring heat from the heated stream of cooling liquid to the steam turbine condensate.

12. The method of any of claims 8-10, wherein the step of cooling the carbon dioxide rich flue gas in the flue gas condenser (11) comprises bringing the carbon dioxide rich flue gas into indirect contact with the steam turbine condensate such that the flue gas condenser (11) functions as the first condensate reheater.

## Patentansprüche

1. Wärmerückgewinnungssystem, das betriebsfähig ist, um Wärme aus einem in einem Kessel (3) erzeugten kohlendioxidreichen Rauchgas, wobei in dem Kessel Brennstoff in Anwesenheit eines sauerstoffhaltigen Gases verbrannt und Dampf zum Antreiben einer Dampfturbine (7) erzeugt wird, auf ein in der Dampfturbine (7) erzeugtes Dampfturbinenkondensat zu übertragen, wobei das Wärmerückgewinnungssystem Folgendes umfasst:
einen Rauchgaskondensator (11), der angeordnet ist, um das kohlendioxidreiche Rauchgas zu kühlen, so dass Dampf aus dem Rauchgas auskondensiert wird,
mindestens eine Verdichtungsstufe (15), die angeordnet ist, um das kohlendioxidreiche Rauchgas stromabwärts hinter dem Rauchgaskondensator (11) zu verdichten, um einen verdichteten und erwärmten kohlendioxidreichen Rauchgasstrom zu bilden,
und **gekennzeichnet durch**:
ein erstes Rohr (8, 8a), um mindestens einen Anteil des Dampfturbinenkondensats von der Dampfturbine (7) zu einem ersten Kondensatnacherwärmer (19) zu leiten,
wobei der erste Kondensatnacherwärmer (19) angeordnet ist, um Wärme aus dem Rauchgaskondensator (11) auf das Dampfturbinenkondensat zu übertragen, um einen erwärmten Dampfturbinenkondensatstrom bei einer ersten Temperatur zu bilden,
ein zweites Rohr (8b, 8d), um mindestens einen ersten Anteil des erwärmten Dampfturbinenkondensatstroms bei der ersten Temperatur zu einem zweiten Kondensatnacherwärmer (21) zu leiten,
wobei der zweite Kondensatnacherwärmer (21) angeordnet ist, um Wärme auf den erwärmten Dampfturbinenkondensatstrom bei der ersten Temperatur aus dem verdichteten und erwärmten kohlendioxidreichen Rauchgasstrom zu übertragen, um einen erwärmten Dampfturbinenkondensatstrom bei einer zweiten Temperatur zu bilden, wobei die zweite Temperatur höher als die erste Temperatur ist, und
ein Rücklaufrohr (8), um mindestens einen Anteil des erwärmten Dampfturbinenkondensatstroms bei der zweiten Temperatur zum Kessel zu leiten.

2. Wärmerückgewinnungssystem nach Anspruch 1, das weiterhin ein drittes Rohr (8b, 8c, 8) umfasst, um einen zweiten Anteil des erwärmten Dampfturbinenkondensatstroms bei der ersten Temperatur vom ersten Kondensatnacherwärmer (19) zu einem Kondensatvorwärmer (23) zu leiten, um Dampfturbinenkondensat unter Nutzung von Dampf aus der Dampfturbine (7) vorzuwärmen, wobei der zweite Anteil im Bypass um den zweiten Kondensatnacherwärmer (21) geführt wird.

3. Wärmerückgewinnungssystem nach einem der vorstehend aufgeführten Ansprüche, das weiterhin ein viertes Rohr (8e, 8) umfasst, um den ersten Anteil des erwärmten Kondensatstroms bei der zweiten Temperatur aus dem zweiten Kondensatnacherwärmer (21) zum Kessel (3) zu leiten, wobei der erste Anteil im Bypass um einen Vorwärmer (23) geführt wird, um Dampfturbinenkondensat unter Nutzung von Dampf aus der Dampfturbine (7) vorzuwärmen.

4. Wärmerückgewinnungssystem nach einem der vorstehend aufgeführten Ansprüche, bei dem der Rauchgaskondensator (11) angeordnet ist, um das Rauchgas dadurch zu kühlen, dass das Rauchgas in direkten oder indirekten Kontakt mit einer Kühlflüssigkeit gebracht wird, so dass ein erwärmter Kühlflüssigkeitsstrom gebildet wird, und wobei der erste Kondensatnacherwärmer (19) angeordnet ist, um Wärme auf das Dampfturbinenkondensat aus dem erwärmten Kühlflüssigkeitsstrom zu übertragen.

5. Wärmerückgewinnungssystem nach einem der Ansprüche 1 bis 3, bei dem der Rauchgaskondensator (11) angeordnet ist, um das kohlendioxidreiche Rauchgas dadurch zu kühlen, dass das kohlendioxidreiche Rauchgas in indirekten Kontakt mit dem Dampfturbinenkondensat gebracht wird, so dass der Rauchgaskondensator (11) als der erste Kondensatnacherwärmer dient.

6. Wärmerückgewinnungssystem nach einem der vorstehend aufgeführten Ansprüche, bei dem die mindestens eine Verdichtungsstufe (15) einen adiabatischen Verdichter umfasst.

7. Wärmerückgewinnungssystem nach einem der vorstehend aufgeführten Ansprüche, bei dem die mindestens eine Verdichtungsstufe (15) einen Axialverdichter umfasst.

8. Verfahren zum Übertragen von Wärme aus einem kohlendioxidreichen Rauchgas, das in einem Kessel (3) erzeugt wird, in dem Brennstoff in Anwesenheit eines sauerstoffhaltigen Gases verbrannt und Dampf zum Antreiben einer Dampfturbine (7) erzeugt wird, auf ein in der Dampfturbine (7) erzeugtes Dampfturbinenkondensat, wobei das Verfahren die folgenden Schritte umfasst:
Kühlen des kohlendioxidreichen Rauchgases in einem Rauchgaskondensator (11), so dass Dampf aus dem Rauchgas auskondensiert wird,
Verdichten des Rauchgases stromabwärts hinter dem Rauchgaskondensator (11), um einen verdichteten und erwärmten Rauchgasstrom zu bilden,
und **gekennzeichnet durch**
Leiten von mindestens einem Anteil des Dampfturbinenkondensats aus der Dampfturbine (7) zu einem ersten Kondensatnacherwärmer (19),
Übertragen von Wärme aus dem Rauchgaskondensator (11) auf das Kondensat der Dampfturbine (7) im ersten Kondensatnacherwärmer (19), um einen erwärmten Dampfturbinenkondensatstrom bei einer ersten Temperatur zu bilden,
Leiten von mindestens einem ersten Anteil des erwärmten Dampfturbinenkondensatstroms bei der ersten Temperatur zu einem zweiten Kondensatnacherwärmer (21),
Übertragen von Wärme auf den erwärmten Dampfturbinenkondensatstrom bei der ersten Temperatur aus dem verdichteten und erwärmten kohlendioxidreichen Rauchgasstrom im zweiten Kondensatnacherwärmer (21), um einen erwärmten Dampfturbinenkondensatstrom bei einer zweiten Temperatur zu bilden, wobei die zweite Temperatur höher als die erste Temperatur ist, und
Leiten von mindestens einem Anteil des erwärmten Dampfturbinenkondensatstroms bei der zweiten Temperatur zum Kessel (3).

9. Verfahren nach Anspruch 8, das weiterhin den folgenden Schritt umfasst:
Leiten eines zweiten Anteils des erwärmten Kondensatstroms bei der ersten Temperatur aus dem ersten Kondensatnacherwärmer (19) zu einem Kondensatvorwärmer (23), um Dampfturbinenkondensat unter Nutzung von Dampf aus der Dampfturbine (7) vorzuwärmen, wobei der zweite Anteil im Bypass um den zweiten Kondensatnacherwärmer (21) geführt wird.

10. Verfahren nach einem der Ansprüche 8 bis 9, das weiterhin den Schritt des Leitens des ersten Anteils des erwärmten Dampfturbinenkondensatstroms bei der zweiten Temperatur aus dem zweiten Kondensatnacherwärmer (21) zum Kessel (3) umfasst, wobei der erste Anteil im Bypass um einen Vorwärmer (23) geführt wird, um Dampfturbinenkondensat unter Nutzung von Dampf aus der Dampfturbine (7) vorzuwärmen.

11. Verfahren nach einem der Ansprüche 8 bis 10, bei dem der Schritt des Kühlens des Rauchgases im Rauchgaskondensator (11) das Bringen des Rauchgases in direkten oder indirekten Kontakt mit einer Kühlflüssigkeit umfasst, so dass ein erwärmter Kühlflüssigkeitsstrom gebildet wird, und wobei der Schritt des Übertragens von Wärme auf das Kondensat im ersten Kondensatnacherwärmer (19) das Übertragen von Wärme aus dem erwärmten Kühlflüssigkeitsstrom auf das Dampfturbinenkondensat umfasst.

12. Verfahren nach einem der Ansprüche 8 bis 10, bei dem der Schritt des Kühlens des kohlendioxidreichen Rauchgases im Rauchgaskondensator (11) das Bringen des kohlendioxidreichen Rauchgases in indirekten Kontakt mit dem Dampfturbinenkondensat umfasst, so dass der Rauchgaskondensator (11) als der erste Kondensatnacherwärmer dient.

## Revendications

1. Système de récupération de chaleur pouvant fonctionner pour transférer de la chaleur d'un gaz de combustion riche en dioxyde de carbone généré dans une chaudière (3) brûlant du combustible en présence d'un gaz contenant de l'oxygène et générant de la vapeur actionnant une turbine (7) à vapeur à un condensat de turbine à vapeur généré dans la turbine (7) à vapeur,
le système de récupération de chaleur comportant
un condenseur (11) de gaz de combustion agencé de manière à refroidir le gaz de combustion riche en dioxyde de carbone de telle façon qu'une vapeur soit condensée à partir du gaz de combustion,
au moins un étage (15) de compression agencé de manière à comprimer le gaz de combustion riche en dioxyde de carbone en aval du condenseur (11) de gaz de combustion pour former un flux de gaz de combustion comprimé et chauffé riche en dioxyde de carbone, et **caractérisé par** une première conduite (8, 8a) servant à transmettre au moins une partie du condensat de turbine à vapeur de la turbine (7) à vapeur à un premier réchauffeur (19) de condensat,
le premier réchauffeur (19) de condensat étant agencé de manière à transférer de la chaleur du condenseur (11) de gaz de combustion au condensat de turbine à vapeur pour former un flux de condensat chauffé de turbine à vapeur à une première température,
une deuxième conduite (8b, 8d) servant à transmettre au moins une première partie du flux de condensat chauffé de turbine à vapeur à la première température à un deuxième réchauffeur (21) de condensat,
le deuxième réchauffeur (21) de condensat étant agencé de manière à transférer de la chaleur au flux de condensat chauffé de turbine à vapeur à la première température à partir du flux de gaz de combustion comprimé et chauffé riche en dioxyde de carbone pour former un flux de condensat chauffé de turbine à vapeur à une deuxième température, la deuxième température étant supérieure à la première température, et
une conduite (8) de retour servant à transmettre au moins une partie du flux de condensat chauffé de turbine à vapeur à la deuxième température vers la chaudière.

2. Système de récupération de chaleur selon la revendication 1, comportant en outre une troisième conduite (8b, 8c, 8) servant à transmettre une deuxième partie du flux de condensat chauffé de turbine à vapeur à la première température du premier réchauffeur (19) de condensat à un préchauffeur (23) de condensat servant à préchauffer du condensat de turbine à vapeur en utilisant de la vapeur provenant de la turbine (7) à vapeur, ladite deuxième partie contournant le deuxième réchauffeur (21) de condensat.

3. Système de récupération de chaleur selon l'une quelconque des revendications précédentes, comportant en outre une quatrième conduite (8e, 8) servant à transmettre la première partie du flux de condensat chauffé à la deuxième température du deuxième réchauffeur (21) de condensat vers la chaudière (3), la première partie contournant un préchauffeur (23) préchauffant du condensat de turbine à vapeur en utilisant de la vapeur provenant de la turbine (7) à vapeur.

4. Système de récupération de chaleur selon l'une quelconque des revendications précédentes, le condenseur (11) de gaz de combustion étant agencé de manière à refroidir le gaz de combustion en amenant le gaz de combustion en contact direct ou indirect avec un liquide de refroidissement de telle façon qu'un flux de liquide de refroidissement chauffé soit formé, et le premier réchauffeur (19) de condensat étant agencé de manière à transférer de la chaleur au condensat de turbine à vapeur à partir du flux de liquide de refroidissement chauffé.

5. Système de récupération de chaleur selon l'une quelconque des revendications 1 à 3, le condenseur (11) de gaz de combustion étant agencé de manière à refroidir le gaz de combustion riche en dioxyde de carbone en amenant le gaz de combustion riche en dioxyde de carbone en contact indirect avec le condensat de turbine à vapeur de telle façon que le condenseur (11) de gaz de combustion fonctionne comme le premier réchauffeur de condensat.

6. Système de récupération de chaleur selon l'une quelconque des revendications précédentes, l'étage ou les étages (15) de compression comportant un compresseur adiabatique.

7. Système de récupération de chaleur selon l'une quelconque des revendications précédentes, l'étage ou les étages (15) de compression comportant un compresseur axial.

8. Procédé de transfert de chaleur d'un gaz de combustion riche en dioxyde de carbone généré dans un chaudière (3) brûlant du combustible en présence d'un présence d'un gaz contenant de l'oxygène et générant de la vapeur actionnant une turbine (7) à vapeur à un condensat de turbine à vapeur généré dans la turbine (7) à vapeur, comportant les étapes consistant à
refroidir le gaz de combustion riche en dioxyde de carbone dans un condenseur (11) de gaz de combustion de telle façon qu'une vapeur soit condensée à partir du gaz de combustion,
comprimer le gaz de combustion en aval du condenseur (11) de gaz de combustion pour former un flux de gaz de combustion comprimé et chauffé, et **caractérisé par** les étapes consistant à
transmettre au moins une partie du condensat de turbine à vapeur de la turbine (7) à vapeur à un premier réchauffeur (19) de condensat,
transférer de la chaleur du condenseur (11) de gaz de combustion au condensat de turbine (7) à vapeur dans le premier réchauffeur (19) de condensat pour former un flux de condensat chauffé de turbine à vapeur à une première température,
transmettre au moins une première partie du flux de condensat chauffé de turbine à vapeur à la première température vers un deuxième réchauffeur (21) de condensat,
transférer de la chaleur au flux de condensat chauffé de turbine à vapeur à la première température à partir du flux de gaz de combustion comprimé et chauffé riche en dioxyde de carbone dans le deuxième réchauffeur (21) de condensat pour former un flux de condensat chauffé de turbine à vapeur à une deuxième température, la deuxième température étant supérieure à la première température, et
transmettre au moins une partie du flux de condensat chauffé de turbine à vapeur à la deuxième température vers la chaudière (3).

9. Procédé selon la revendication 8, comportant en outre l'étape consistant à
transmettre une deuxième partie du flux de condensat chauffé à la première température du premier réchauffeur (19) de condensat à un préchauffeur (23) de condensat servant à préchauffer du condensat de turbine à vapeur en utilisant de la vapeur provenant de la turbine (7) à vapeur, ladite deuxième partie contournant le deuxième réchauffeur (21) de condensat.

10. Procédé selon l'une quelconque des revendications 8 à 9, comportant en outre l'étape consistant à
transmettre la première partie du flux de condensat chauffé de turbine à vapeur à la deuxième température du deuxième réchauffeur (21) de condensat vers la chaudière (3), la première partie contournant un préchauffeur (23) préchauffant du condensat de turbine à vapeur en utilisant de la vapeur provenant de la turbine (7) à vapeur.

11. Procédé selon l'une quelconque des revendications 8 à 10, l'étape de refroidissement du gaz de combustion dans le condenseur (11) de gaz de combustion comportant l'étape consistant à amener le gaz de combustion en contact direct ou indirect avec un liquide de refroidissement de telle façon qu'un flux de liquide de refroidissement chauffé soit formé, et l'étape de transfert de chaleur au condensat dans le premier réchauffeur (19) de condensat comportant l'étape consistant à transférer de la chaleur du flux de liquide de refroidissement chauffé au condensat de turbine à vapeur.

12. Procédé selon l'une quelconque des revendications 8 à 10, l'étape de refroidissement du gaz de combustion riche en dioxyde de carbone dans le condenseur (11) de gaz de combustion comportant l'étape consistant à amener le gaz de combustion riche en dioxyde de carbone en contact indirect avec le condensat de turbine à vapeur de telle façon que le condenseur (11) de gaz de combustion fonctionne comme le premier réchauffeur de condensat.
